# EUROPEAN PATENT APPLICATION

(11) **EP 4 766 006 A1**
(43) Date of publication of application: **24.06.2026**
(21) Application number: 24855604.5
(22) Date of filing: 02.08.2024
(51) Int. Cl.: H04W 76/15

(54) **COMMUNICATION METHOD AND COMMUNICATION APPARATUS**

(30) Priority: 21.08.2023 CN 202311056512
(71) Applicant: HUAWEI TECHNOLOGIES CO., LTD., Shenzhen 518129 (CN)
(72) Inventor: HAN, Yunfeng, Shenzhen, Guangdong 518129 (CN); MA, Yunsi, Shenzhen, Guangdong 518129 (CN)
(74) Representative: Isarpatent
(86) International application number: PCT/CN2024/109449
(87) International publication number: WO 2025/039878

(57) **Abstract**

This application provides a communication method and a communication apparatus, to simplify a centralized control function of a control device. For example, in this application, it is limited that one non-access point multi-link device performs data service transmission with only one multi-link device set at a same moment. In this case, control of data service transmission of the non-access point multi-link device may be performed by each multi-link device set, and centralized control of the control device is not required. Therefore, the centralized control function of the control device may be simplified as that the control device is responsible for coarse-grained control between multi-link device sets (for example, controlling user information synchronization and key information synchronization between different multi-link device sets), thereby simplifying the centralized control function.

## Description

This application claims priority to Chinese Patent Application No. 202311056512.5, filed with the China National Intellectual Property Administration on August 21, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A distributed multi-link (MultiLink) solution means that a plurality of devices are connected through a backhaul (backhaul) link in a wired manner (for example, through an optical fiber or an Ethernet (giga)), the plurality of devices form a generalized multi-link device (multi-link device, MLD) logical entity, and sublinks of the multi-link device logical entity are distributed on one or more devices. After the MLD logical entity is networked, roaming experience of a terminal device can be improved. In the distributed multi-link solution, centralized main control may be used to manage all links. However, when a scale of a distributed MLD network is large, the main control solution is extremely complex, which is not conducive to implementation and cannot support further expansion of the scale of the distributed MLD network.

### SUMMARY

This application provides a communication method and a communication apparatus. The communication method can simplify a centralized control function of a control device in a distributed MLD network.

According to a first aspect, this application provides a communication method. The method is performed by a control device, or is performed by a component (for example, a processor, a chip, or a chip system) of the control device, or may be performed by a logical module that can implement all or some functions of the control device. The control device receives first user information from a first multi-link device MLD, where the first user information includes one or more of address information of a non-access point multi-link device non-AP MLD that performs data service transmission with the first MLD, a quantity of links of the non-AP MLD, a link capability of the non-AP MLD, a quantity of links of the first MLD, and a link capability of the first MLD. The control device sends the first user information to a second MLD, where the second MLD and the first MLD belong to different MLD sets, the non-AP MLD performs data service transmission with only one MLD set at a same moment, and the first user information is used by the second MLD to determine second user information for performing data service transmission with the non-AP MLD.

In the method, a centralized control function of the control device is simplified. For example, in this application, it is limited that one non-AP MLD performs data service transmission with only one MLD set at a same moment (for example, the non-AP MLD performs data service transmission with only the first MLD at a same moment). In this case, control of data service transmission of the non-AP MLD may be performed by each MLD set, and centralized control of the control device is not required. Therefore, the centralized control function of the control device may be simplified as that the control device is responsible for coarse-grained control between MLD sets (for example, controlling user information synchronization between different MLDs, which helps simplify an operation and the like when the non-AP MLD roams between different MLDs).

In a possible implementation, the control device receives physical addresses of links of all MLD sets. The control device determines a multicast key of each link based on the physical addresses of the links of all the MLD sets. The control device determines a unicast key of the non-AP MLD based on the address information of the non-AP MLD.

In the method, the control device may determine the multicast key of each link based on the physical addresses of the links of all the MLD sets. When the non-AP MLD accesses an MLD, the control device may further determine the unicast key of the non-AP MLD. This helps the control device implement key synchronization between different MLD sets.

In a possible implementation, the control device receives a first request message from the first MLD, where the first request message is used to request to obtain first key information of a first MLD set. The control device sends a multicast key of each link of the first MLD set and the unicast key of the non-AP MLD to the first MLD.

In the method, in an association phase of the non-AP MLD, the control device may send key information to an MLD associated with the non-AP MLD.

In a possible implementation, the control device receives a second request message from the first MLD, where the second request message is used to request to obtain second key information of a second MLD set. The control device sends a multicast key of each link of the second MLD set to the first MLD.

In the method, in an association phase of the non-AP MLD, the control device may implement key synchronization between different MLD sets.

In a possible implementation, the control device sends first indication information to a first MLD set, where the first indication information indicates the first MLD to switch a data service of the non-AP MLD to the second MLD for transmission.

In the method, in a roaming phase of the non-AP MLD, the control device may control data service switching between MLD sets.

In a possible implementation, the control device receives respective physical link capabilities of a plurality of MLDs in all MLD sets. The control device determines that a maximum value of the respective physical link capabilities of the plurality of MLDs is a maximum physical link capability. The control device sends second indication information to the plurality of MLDs, where the second indication information indicates the maximum physical link capability, and the plurality of MLDs include the first MLD and the second MLD.

In the method, the control device may further determine the maximum physical link capability of all the MLD sets, and indicate the maximum physical link capability to each MLD set. This helps each MLD set determine whether to create a virtual link.

According to a second aspect, this application provides a communication method. The method is performed by a multi-link device, or is performed by a component (for example, a processor, a chip, or a chip system) of the multi-link device, or may be performed by a logical module that can implement all or some functions of the multi-link device. The multi-link device is briefly referred to as an MLD. A first MLD is used as an example for description. The first MLD determines first user information, where the first user information includes one or more of address information of a non-AP MLD that performs data service transmission with the first MLD, a quantity of links of the non-AP MLD, a link capability of the non-AP MLD, a quantity of links of the first MLD, and a link capability of the first MLD. The first MLD sends the first user information to a control device, where the first user information is used by a second MLD to determine second user information for performing data service transmission with the non-AP MLD, the second MLD and the first MLD belong to different MLD sets, and the non-AP MLD performs data service transmission with only one MLD set at a same moment.

In the method, the first MLD may send the first user information to the control device, to help the control device collect user information of all MLD sets, and therefore help the control device share the user information between different MLD sets.

In a possible implementation, the first MLD sends a physical address of a link of a first MLD set to the control device, where the first MLD belongs to the first MLD set, and the physical address of the link of the first MLD set is used to determine a multicast key of each link of the first MLD set.

In the method, the first MLD may send, to the control device, the physical addresses of the links of the first MLD set to which the first MLD belongs, to help the control device generate a multicast key of the first MLD set. The multicast key may be synchronized between different MLD sets through the control device.

In a possible implementation, the first MLD sends a first request message to the control device, where the first request message is used to request to obtain first key information of the first MLD. The first MLD receives a multicast key of each link of the first MLD and a unicast key of the non-AP MLD. The first MLD sends the multicast key of each link of the first MLD and the unicast key of the non-AP MLD to the non-AP MLD.

In the method, in an association phase of the non-AP MLD, the first MLD may request the control device to obtain the multicast key of each link and the unicast key of the associated non-AP MLD.

In a possible implementation, the first MLD sends a second request message to the control device, where the second request message is used to request to obtain second key information of the second MLD. The first MLD receives a multicast key of each link of the second MLD. The first MLD sends the multicast key of each link of the second MLD to the non-AP MLD.

In the method, in a roaming phase of the non-AP, the first MLD may request the control device to obtain a multicast key of each link of another MLD, to help the non-AP MLD roam to the another MLD.

In a possible implementation, the first MLD receives first indication information from the control device, where the first indication information indicates the first MLD to switch a data service of the non-AP MLD to the second MLD for transmission. The first MLD sends the first indication information to the non-AP MLD.

In the method, in the roaming phase of the non-AP MLD, the first MLD may switch, based on the first indication information of the control device, the data service of the non-AP MLD to the second MLD for transmission.

In a possible implementation, the first MLD sends a physical link capability of the first MLD to the control device. The first MLD receives second indication information from the control device, where the second indication information indicates a maximum physical link capability, and the maximum physical link capability is a maximum value of respective physical link capabilities of a plurality of MLDs managed by the control device. If the link capability of the first MLD is less than the maximum physical link capability, the first MLD creates a virtual link.

In the method, the first MLD may receive the maximum physical link capability indicated by the control device, and determine, based on the physical link capability of the first MLD, whether to create a virtual link, to help the non-AP MLD quickly access different MLDs in the roaming phase.

In a possible implementation, the first MLD sends first link capability information to the second MLD and the non-AP MLD, where the first link capability information includes a first identifier indicating whether the link of the first MLD is a physical link or a virtual link, and/or a link capability of each link.

In the method, the first MLD may send the first link capability information to another MLD and the non-AP MLD, to share the link capability information of the first MLD between different MLD sets.

In a possible implementation, the first MLD broadcasts a first link attribute of the first MLD set, where the first link attribute includes one or more of link identifiers, link capabilities, and physical addresses of all links in the first MLD set, and the first MLD belongs to the first MLD set.

In the method, the first MLD broadcasts only link attributes of all the links in the MLD set to which the first MLD belongs, rather than broadcasts link attributes of all links in all the MLD sets. This helps reduce signaling overheads.

In a possible implementation, the user information, the link attribute, or the link capability information is carried in one or more of the following frame bodies: a beacon (beacon) frame, a probe response (probe response) frame, and an association response (assoc response) frame.

According to a third aspect, this application provides a communication method. The method is performed by a non-access point device, or is performed by a component (for example, a processor, a chip, or a chip system) of the non-access point device, or may be performed by a logical module that can implement all or some functions of the non-access point device. The non-access point device is also referred to as a non-access point multi-link device or a station multi-link device, or is briefly referred to as a non-AP MLD. The non-AP MLD is used as an example for description. The non-AP MLD sends a third request message to a first MLD, where the third request message is used to request to initiate association to the first MLD for network access. The non-AP MLD receives first user information from the first MLD, where the first user information includes one or more of address information of the non-AP MLD, a quantity of links of the non-AP MLD, a link capability of the non-AP MLD, a quantity of links of the first MLD, and a link capability of the first MLD. The first user information is used by a second MLD managed by a control device to determine second user information for performing data service transmission with the non-AP MLD, the second MLD and the first MLD belong to different MLD sets, and the non-AP MLD performs data service transmission with only one MLD set at a same moment.

In the method, the non-AP MLD can initiate association to only an MLD in one MLD set for network access and perform data service transmission with only one MLD set at a same moment. This helps simplify a centralized control function of the control device.

In a possible implementation, the non-AP MLD receives a multicast key of each link of the first MLD and a unicast key of the non-AP MLD.

In the method, in an association phase of the non-AP MLD, the non-AP MLD may obtain a multicast key of each link of an associated MLD and the unicast key of the non-AP MLD, which is conducive to encrypted transmission of a data service.

In a possible implementation, the non-AP MLD receives a multicast key of each link of the second MLD from the first MLD.

In the method, in a roaming phase of the non-AP MLD, the non-AP MLD may further obtain a multicast key of each link of another MLD through the associated MLD, to help the non-AP MLD roam to the another MLD.

In a possible implementation, the non-AP MLD receives first indication information from the first MLD, where the first indication information indicates the first MLD to switch a data service of the non-AP MLD to the second MLD for transmission.

In the method, in a roaming phase of the non-AP MLD, the control device indicates the first MLD to switch the data service of the non-AP MLD to the second MLD for transmission.

In a possible implementation, the non-AP MLD receives first link capability information from the first MLD, where the first link capability information includes a first identifier indicating whether a link of a first MLD set is a physical link or a virtual link, and/or a link capability of each link.

In the method, in an association phase of the non-AP MLD, the non-AP MLD may obtain link capability information of an MLD set, to determine to establish a corresponding link (a physical link or a virtual link) with the MLD set.

In a possible implementation, the non-AP MLD receives second link capability information from the second MLD, where the second link capability information includes a second identifier indicating whether a link of a second MLD set is a physical link or a virtual link, and/or a link capability of each link. If the first identifier indicates that the first MLD set includes a virtual link, and the second identifier indicates that the second MLD set does not include a virtual link, the non-AP MLD switches a data service transmitted on a physical link of the first MLD set to all links of the second MLD set for transmission.

In a possible implementation, if the first identifier indicates that the first MLD set does not include a virtual link, and the second identifier indicates that the second MLD set includes a virtual link, the non-AP MLD switches a data service transmitted on all links of the first MLD set to a physical link of the second MLD set for transmission.

In the method, in the roaming phase of the non-AP MLD, the non-AP MLD may further receive the second link capability information of the second MLD set, and determine, based on the first link capability information and the second link capability information, a solution for data service switching transmission.

In a possible implementation, the non-AP MLD sends a fourth request message to the first MLD, where the fourth request message is used to request to roam to the second MLD. The non-AP MLD receives a fourth response message from the first MLD. The non-AP MLD performs an operation of roaming to the second MLD. The non-AP MLD exchanges a unicast encrypted management frame with the second MLD, to obtain the multicast key of each link of the second MLD.

In the method, in the roaming phase of the non-AP MLD, a roaming response message received by the non-AP MLD from the first MLD does not carry a multicast key of a target MLD set, and the non-AP MLD may exchange a management frame with a target MLD after roaming is completed to obtain a multicast key of each link of the target MLD.

In a possible implementation, the non-AP MLD obtains a link attribute of one or more MLDs, where a link attribute of one MLD includes one or more of link identifiers, link capabilities, and physical addresses of all links of the MLD.

In the method, an MLD broadcasts only link attributes of all links of an MLD set to which the MLD belongs, rather than broadcasts link attributes of all links of all MLD sets, so that information carried in a frame body such as a beacon frame can be reduced.

In a possible implementation, the non-AP MLD obtains signal quality of one or more MLDs, and determines to initiate association to an MLD with highest link quality for network access.

In the method, before the non-AP MLD accesses a network through association, the non-AP MLD may scan different MLD sets, and select an MLD with highest link quality to initiate association for network access.

In a possible implementation, the non-AP MLD updates link quality of one or more MLDs. The non-AP MLD determines, based on updated link quality of the one or more MLDs, to roam to the second MLD. Updated link quality of the second MLD is higher than link quality of the first MLD.

In the method, the non-AP MLD may update link quality of each MLD during movement, and determine, based on updated link quality, whether to perform roaming.

In a possible implementation, the user information, the link attribute, or the link capability information is carried in one or more of the following frame bodies: a beacon (beacon) frame, a probe response (probe response) frame, and an association response (assoc response) frame.

According to a fourth aspect, this application provides a communication apparatus. The communication apparatus may be a control device, may be an apparatus of the control device, or may be an apparatus that can be used together with the control device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive first user information from a first multi-link device MLD, where the first user information includes one or more of address information of a non-access point multi-link device non-AP MLD that performs data service transmission with the first MLD, a quantity of links of the non-AP MLD, a link capability of the non-AP MLD, a quantity of links of the first MLD, and a link capability of the first MLD. The communication unit is further configured to send the first user information to a second MLD, where the second MLD and the first MLD belong to different MLD sets, the non-AP MLD performs data service transmission with only one MLD set at a same moment, and the first user information is used by the second MLD to determine second user information for performing data service transmission with the non-AP MLD.

In a possible implementation, the communication unit is configured to receive physical addresses of links of all MLD sets. The processing unit is configured to determine a multicast key of each link based on the physical addresses of the links of all the MLD sets. The processing unit is further configured to determine a unicast key of the non-AP MLD based on the address information of the non-AP MLD.

In a possible implementation, the communication unit is configured to receive a first request message from the first MLD, where the first request message is used to request to obtain first key information of a first MLD set. The communication unit is further configured to send a multicast key of each link of the first MLD set and the unicast key of the non-AP MLD to the first MLD.

In a possible implementation, the communication unit is configured to receive a second request message from the first MLD, where the second request message is used to request to obtain second key information of a second MLD set. The communication unit is further configured to send a multicast key of each link of the second MLD set to the first MLD.

In a possible implementation, the communication unit is configured to send first indication information to a first MLD set, where the first indication information indicates the first MLD to switch a data service of the non-AP MLD to the second MLD for transmission.

In a possible implementation, the communication unit is configured to receive respective physical link capabilities of a plurality of MLDs in all MLD sets. The processing unit is configured to determine that a maximum value of the respective physical link capabilities of the plurality of MLDs is a maximum physical link capability. The communication unit is further configured to send second indication information to the plurality of MLDs, where the second indication information indicates the maximum physical link capability, and the plurality of MLDs include the first MLD and the second MLD.

According to a fifth aspect, this application provides a communication apparatus. The communication apparatus may be a multi-link device, may be an apparatus of the multi-link device, or may be an apparatus that can be used together with the multi-link device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The processing unit is configured to determine first user information, where the first user information includes one or more of address information of a non-AP MLD that performs data service transmission with a first MLD, a quantity of links of the non-AP MLD, a link capability of the non-AP MLD, a quantity of links of the first MLD, and a link capability of the first MLD. The communication unit is configured to send the first user information to a control device, where the first user information is used by a second MLD to determine second user information for performing data service transmission with the non-AP MLD, the second MLD and the first MLD belong to different MLD sets, and the non-AP MLD performs data service transmission with only one MLD set at a same moment.

In a possible implementation, the communication unit is configured to send a physical address of a link of a first MLD set to the control device, where the first MLD belongs to the first MLD set, and the physical address of the link of the first MLD set is used to determine a multicast key of each link of the first MLD set.

In a possible implementation, the communication unit is configured to send a first request message to the control device, where the first request message is used to request to obtain first key information of the first MLD. The communication unit is further configured to receive a multicast key of each link of the first MLD and a unicast key of the non-AP MLD. The communication unit is further configured to send the multicast key of each link of the first MLD and the unicast key of the non-AP MLD to the non-AP MLD.

In a possible implementation, the communication unit is configured to send a second request message to the control device, where the second request message is used to request to obtain second key information of the second MLD. The communication unit is further configured to receive a multicast key of each link of the second MLD. The first MLD sends the multicast key of each link of the second MLD to the non-AP MLD.

In a possible implementation, the communication unit is configured to receive first indication information from the control device, where the first indication information indicates the first MLD to switch a data service of the non-AP MLD to the second MLD for transmission. The communication unit is further configured to send the first indication information to the non-AP MLD.

In a possible implementation, the communication unit is configured to send a physical link capability of the first MLD to the control device. The communication unit is further configured to receive second indication information from the control device, where the second indication information indicates a maximum physical link capability, and the maximum physical link capability is a maximum value of respective physical link capabilities of a plurality of MLDs managed by the control device. If the link capability of the first MLD is less than the maximum physical link capability, the processing unit is configured to create a virtual link.

In a possible implementation, the communication unit is configured to send first link capability information to the second MLD and the non-AP MLD, where the first link capability information includes a first identifier indicating whether the link of the first MLD is a physical link or a virtual link, and/or a link capability of each link.

In a possible implementation, the communication unit is configured to broadcast a first link attribute of the first MLD set, where the first link attribute includes one or more of link identifiers, link capabilities, and physical addresses of all links in the first MLD set, and the first MLD belongs to the first MLD set.

In a possible implementation, the user information, the link attribute, or the link capability information is carried in one or more of the following frame bodies: a beacon (beacon) frame, a probe response (probe response) frame, and an association response (assoc response) frame.

According to a sixth aspect, this application provides a communication apparatus. The communication apparatus may be a non-access point device, may be an apparatus of the non-access point device, or may be an apparatus that can be used together with the non-access point device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send a third request message to a first MLD, where the third request message is used to request to initiate association to the first MLD for network access. The communication unit is further configured to receive first user information from the first MLD, where the first user information includes one or more of address information of a non-AP MLD, a quantity of links of the non-AP MLD, a link capability of the non-AP MLD, a quantity of links of the first MLD, and a link capability of the first MLD. The first user information is used by a second MLD managed by a control device to determine second user information for performing data service transmission with the non-AP MLD, the second MLD and the first MLD belong to different MLD sets, and the non-AP MLD performs data service transmission with only one MLD set at a same moment.

In a possible implementation, the communication unit is configured to receive a multicast key of each link of the first MLD and a unicast key of the non-AP MLD.

In a possible implementation, the communication unit is configured to receive a multicast key of each link of the second MLD from the first MLD.

In a possible implementation, the communication unit is configured to receive first indication information from the first MLD, where the first indication information indicates the first MLD to switch a data service of the non-AP MLD to the second MLD for transmission.

In a possible implementation, the communication unit is configured to receive first link capability information of the first MLD, where the first link capability information includes a first identifier indicating whether the link of the first MLD is a physical link or a virtual link, and/or a link capability of each link.

In a possible implementation, the communication unit is configured to receive second link capability information of the second MLD, where the second link capability information includes a second identifier indicating whether a link of the second MLD is a physical link or a virtual link, and/or a link capability of each link. If the first identifier indicates that the first MLD includes a virtual link, and the second identifier indicates that the second MLD does not include a virtual link, the processing unit is configured to switch a data service transmitted on a physical link of the first MLD to all links of the second MLD for transmission.

In a possible implementation, if the first identifier indicates that the first MLD does not include a virtual link, and the second identifier indicates that the second MLD includes a virtual link, the processing unit is configured to switch a data service transmitted on all links of the first MLD to a physical link of the second MLD for transmission.

In a possible implementation, the communication unit is configured to send a fourth request message to the first MLD, where the fourth request message is used to request to roam to the second MLD. The communication unit is further configured to receive a fourth response message from the first MLD. The processing unit is configured to perform an operation of roaming to the second MLD. The communication unit is further configured to exchange a unicast encrypted management frame with the second MLD, to obtain the multicast key of each link of the second MLD.

In a possible implementation, the communication unit is configured to obtain a link attribute of one or more MLDs, where a link attribute of one MLD includes one or more of link identifiers, link capabilities, and physical addresses of all links of the MLD.

In a possible implementation, the processing unit is configured to: obtain signal quality of one or more MLDs, and determine to initiate association to an MLD with highest link quality for network access.

In a possible implementation, the processing unit is configured to update link quality of one or more MLDs. The processing unit is further configured to determine, based on updated link quality of the one or more MLDs, to roam to the second MLD. Updated link quality of the second MLD is higher than link quality of the first MLD.

In a possible implementation, the user information, the link attribute, or the link capability information is carried in one or more of the following frame bodies: a beacon (beacon) frame, a probe response (probe response) frame, and an association response (assoc response) frame.

For the fourth aspect to the sixth aspect, in an example, the processing unit may be a processor, and the communication unit may be a transceiver unit, a transceiver, or a communication interface. It may be understood that when the communication apparatus is a communication device (for example, a control device, a multi-link device, or a non-access point device), the communication unit may be a transceiver (for example, the transceiver includes a transmitter and a receiver) in the communication apparatus, for example, implemented by an antenna, a feeder, and a codec in the communication apparatus. If the communication apparatus is a chip disposed in a device, the processing unit may be a processing circuit, a logic circuit, or the like of the chip, and the communication unit may be an input/output interface of the chip, for example, an input/output circuit or a pin.

According to a seventh aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method according to any one of the first aspect to the third aspect and the possible implementations of the first aspect to the third aspect. Optionally, the processor is coupled to the memory.

According to an eighth aspect, this application provides a communication system. The communication system includes a plurality of apparatuses or devices according to the fourth aspect to the seventh aspect, so that the apparatuses or devices perform the method according to any one of the first aspect to the third aspect and the possible implementations of the first aspect to the third aspect.

According to a ninth aspect, this application provides a computer-readable storage medium. The computer-readable storage medium stores instructions. When the instructions are run on a computer, the computer is enabled to perform the method according to any one of the first aspect to the third aspect or the possible implementations of the first aspect to the third aspect.

According to a tenth aspect, this application provides a computer program product. The computer program product includes instructions. When the instructions are run on a computer, the computer is enabled to perform the method according to any one of the first aspect to the third aspect or the possible implementations of the first aspect to the third aspect.

According to an eleventh aspect, this application provides a chip. The chip includes a processor (or a logic circuit). Optionally, the chip may further include a communication interface (or an interface), configured to implement the method according to any one of the first aspect to the third aspect and the possible implementations of the first aspect to the third aspect. In a possible implementation, if the chip is a smallest processing unit in an entire device, the chip may be a processor, may include a processor and a memory, or may include a processor, a memory, and a transceiver, and is configured to implement the method according to any one of the first aspect to the third aspect or the possible implementations of the first aspect to the third aspect.

According to a twelfth aspect, this application provides a chip system. The chip system includes a processor and an interface. Optionally, the chip system may further include a memory, configured to implement the method according to any one of the first aspect to the third aspect and the possible implementations of the first aspect to the third aspect. The chip system may include a chip, or may include a chip and another discrete component.

### BRIEF DESCRIPTION OF DRAWINGS

FIG. 1 is a diagram of a communication system according to this application;
FIG. 2 is a diagram of a multi-link device set according to this application;
FIG. 3 is a schematic flowchart of a first communication method according to this application;
FIG. 4 is a diagram of a second communication method according to this application;
FIG. 5 is a diagram of a multi-link device set broadcasting a link attribute and interacting with a non-access point multi-link device according to this application;
FIG. 6 is a schematic flowchart of a third communication method according to this application;
FIG. 7 is a diagram of switching between physical links and virtual links between multi-link device sets according to this application;
FIG. 8 is a diagram of a communication apparatus according to this application; and
FIG. 9 is a diagram of another communication apparatus according to this application.

### DESCRIPTION OF EMBODIMENTS

In embodiments of this application, "/" may represent an "or" relationship between associated objects. For example, A/B may represent A or B. "And/or" may be used to describe a case in which there are three relationships between associated objects. For example, A and/or B may represent the following three cases: Only A exists, both A and B exist, and only B exists, where A and B may be singular or plural. For ease of describing technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term "example", "for example", or the like is used to represent an example, an illustration, or a description. Any embodiment or design scheme described with "example" or "for example" should not be explained as being more preferred or having more advantages than another embodiment or design scheme. Use of the term "example", "for example", or the like is intended to present a related concept in a specific manner for ease of understanding.

The following describes the technical solutions in embodiments of this application with reference to accompanying drawings in embodiments of this application.

To resolve a problem that a main control solution is too complex to be implemented when a scale of a distributed MLD network is large, this application provides a communication method. The method can simplify a centralized control function of a control device in the distributed MLD network.

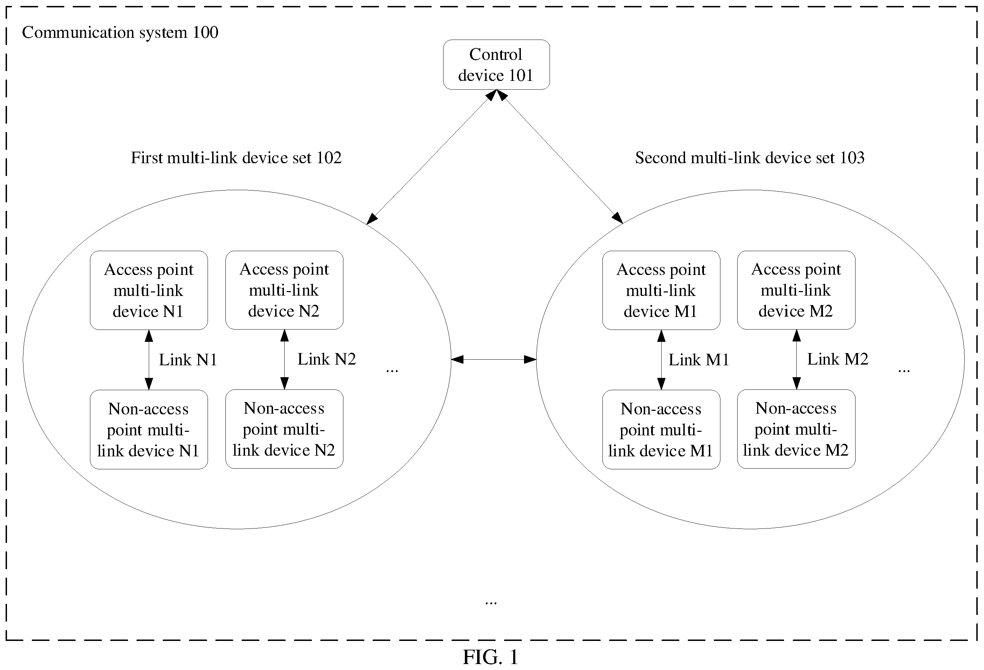

The communication method provided in this application may be applied to a communication system 100 shown in FIG. 1. For example, the communication system 100 includes a control device 101, a first multi-link device (multi-link device, MLD) set 102, and a second MLD set 103. Optionally, FIG. 1 is merely an example. The communication system 100 may further include a plurality of other MLD sets. This is not limited in this application. Optionally, the communication system 100 may also be referred to as a distributed MLD network.

The control device 101 is also referred to as a centralized main control device, and is configured to manage devices and links in the distributed MLD network through centralized main control. For example, the control device may manage the first MLD set and the second MLD set shown in FIG. 1, and may specifically manage access point multi-link devices (access point multi-link devices, AP MLDs), non-access point multi-link devices (non-AP MLDs), and links (links) between the AP MLDs and the non-AP MLDs in the first MLD and the second MLD.

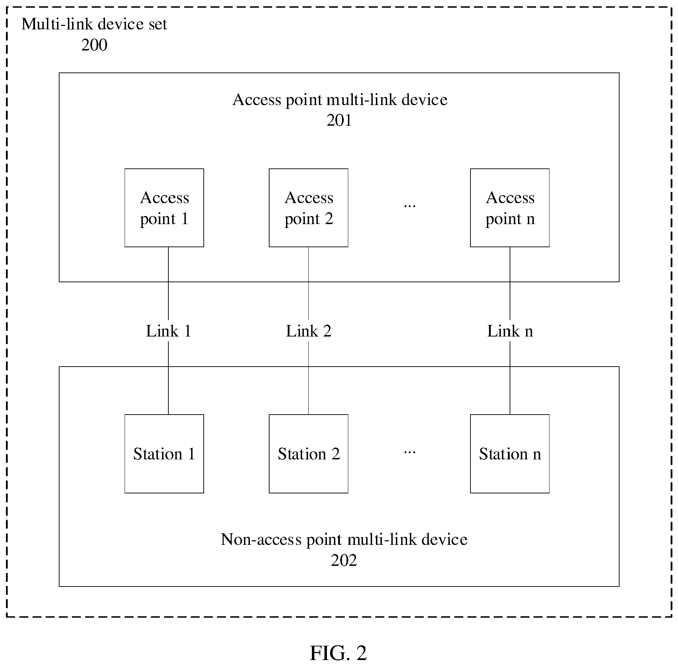

In this application, it is assumed that a plurality of AP MLDs and a plurality of non-AP MLDs may form a generalized MLD logical entity, which is referred to as an MLD set in this application. Links in the MLD set are distributed on one or more devices. After the MLD set is networked, roaming experience of the non-access point multi-link devices can be improved, which helps resolve packet loss and disconnection problems during roaming. For example, FIG. 2 is a diagram of a multi-link device set according to this application. The multi-link device set 200 includes at least two MLDs. One of the two MLDs is an access point multi-link device (AP MLD for short) 201, and the other one of the two MLDs is a non-access point multi-link device (non-AP MLD for short, which is also referred to as a station multi-link device (station multi-link device, STA MLD)) 202. The access point multi-link device 201 includes one or more APs (for example, includes an access point 1 (AP 1) to an access point n (AP n)). The non-access point multi-link device 202 includes one or more non-AP STAs (for example, includes a station 1 (STA 1) to a station n (STA n)). The non-access point multi-link device 202 may communicate with the access point multi-link device 201 after a plurality of links are established (multi-link establishment or multi-link association for short) between the non-access point multi-link device 202 and the access point multi-link device 201. In a multi-link establishment (or multi-link association) process, a STA in the non-access point multi-link device 202 may send an association request frame to an AP in the access point multi-link device 201. The association request frame carries a multi-link element (multi-link element, MLE, which is also referred to as a multi-link information element) to carry information about the non-access point multi-link device 202 and/or information about another STA in the non-access point multi-link device 202. Similarly, an association response frame returned by the AP in the access point multi-link device 201 to the corresponding (associated) STA may also carry an MLE to carry information about the access point multi-link device 201 and/or information about another AP in the access point multi-link device 201. For example, the STA 1 may establish a link to the AP 1 (in other words, the STA 1 and the AP 1 are associated, and may communicate with each other by using a link (link) 1), and the AP 2 may establish a link to the STA 2 (in other words, the STA 2 and the AP 2 are associated, and may communicate with each other by using a link 2). The rest may be deduced by analogy. After the link 1 to a link n shown in FIG. 2 are established, the non-access point multi-link device 202 may communicate with the access point multi-link device 201 by using the link 1 to the link n.

### I. Related concepts in this application

### 1. Communication system:

In this application, the communication system may be a wireless local area network (wireless local area network, WLAN), a cellular network, or another wireless communication system that supports parallel communication on a plurality of links. Embodiments of this application are mainly described by using an example in which an IEEE 802.11 network is deployed. Various aspects in this application may be extended to other networks that use various standards or protocols, for example, Bluetooth (Bluetooth), high-performance radio LAN (high performance radio LAN, HIPERLAN) (a wireless standard similar to the IEEE 802.11 standard, which is mainly used in Europe), a wide area network (WAN), a personal area network (personal area network, PAN), or another network that is known or developed in the future. Therefore, regardless of a used coverage area and a used wireless access protocol, the various aspects provided in this application are applicable to any appropriate wireless network.

### 2. Multi-link device:

The multi-link device is a device that can operate in a plurality of frequency bands or on a plurality of channels. For example, the multi-link device may simultaneously perform communication on 2.4 megahertz (GHz), 5 GHz, and 6 GHz frequency bands, or simultaneously perform communication on different channels of a same frequency band, to improve a communication rate between devices. The multi-link device may implement wireless communication in compliance with 802.11 series protocols. For example, a station that complies with extremely high throughput (extremely high throughput, EHT) or a station that complies with 802.11be or is compatible with and supports 802.11be implements communication with another device. The another device may be a multi-link device, or may not be a multi-link device. Optionally, with evolution of protocol standards, the multi-link device may further perform communication in a higher frequency band (for example, a frequency band above 6 GHz). This is not limited in this application.

The multi-link device usually includes a plurality of STAs or a plurality of APs, and each STA or each AP operates in a specific frequency band or on a specific channel. The multi-link device may be an access point device (AP MLD), or may be a station device (non-AP MLD or non-AP STA MLD). If the multi-link device is an access point device (for example, the access point multi-link device 201 shown in FIG. 2), the device includes one or more APs. If the multi-link device is a station device (for example, the non-access point multi-link device 202 shown in FIG. 2), the device includes one or more non-AP STAs. The station device may communicate with an access point device after a plurality of links are established (multi-link establishment or multi-link association for short) between the station device and the access point device.

In this application, the multi-link device (for example, the AP MLD or the non-AP MLD in FIG. 2) is an apparatus having a wireless communication function. The apparatus may be an entire device, or may be a chip, a processing system, or the like installed in the entire device. The device in which the chip or the processing system is installed may implement methods and functions in this application under control of the chip or the processing system. For example, the multi-link device may be a multi-link device with a single antenna (or a single radio frequency module), or may be a multi-link device with a plurality of antennas (or a plurality of radio frequency modules). A quantity of antennas included in the multi-link device is not limited in embodiments of this application.

In this application, the non-AP MLD has a wireless transceiver function, may support the 802.11 series protocols, and may communicate with an AP MLD, another non-AP MLD, or a single-link device. For example, the non-AP MLD may be any user communication device that allows a user to communicate with an AP and further communicate with a WLAN, including but not limited to, user equipment that can be connected to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an internet of things node in an internet of things, or a vehicle-mounted communication apparatus in an internet of vehicles. Optionally, the non-AP MLD may alternatively be a chip and a processing system in the foregoing terminals.

In this application, the AP MLD may be an apparatus that provides a service for a non-AP MLD, and may support the 802.11 series protocols. For example, the AP MLD may be a communication entity, for example, a communication server, a router, a switch, or a bridge, or the AP MLD may include a macro base station, a micro base station, a relay station, and the like in various forms. Certainly, the AP MLD may alternatively be a chip and a processing system in the devices in the various forms. In this way, the method and functions in embodiments of this application are implemented.

The multi-link device may support high-rate and low-latency transmission. With continuous evolution of application scenarios of wireless local area networks, the multi-link device may be further applied to more scenarios, for example, a sensor node (for example, a smart meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an AR device, a VR device, or another wearable device), a smart device (for example, a printer or a projector) in a smart office, an internet of vehicles device in an internet of vehicles, and some infrastructures (for example, a vending machine, a self-service navigation kiosk of a shopping mall or supermarket, a self-service cash register device, or a self-service ordering machine) in daily life scenarios. Specific forms of the AP MLD and the non-AP MLD are not specially limited in embodiments of this application. The foregoing devices are merely examples for description herein. An 802.11 protocol may be a protocol that supports 802.11be or is compatible with 802.11be.

### 3. Multi-link device set:

In this application, it is assumed that one or more MLDs may form an MLD set, each MLD set may be distributed on a same device, and a plurality of MLD sets may form a distributed MLD network. For example, the communication system shown in FIG. 1 may also be referred to as a distributed MLD network. The distributed MLD network includes a plurality of MLD sets (for example, includes the first MLD set and the second MLD set), and each MLD set includes one or more MLDs (for example, the first MLD set includes at least two MLDs, each MLD may include one or more links, and the one or more links may operate simultaneously). Different MLD sets are distributed on different devices, and MLDs in the different MLD sets are different (links are also different).

It should be noted that:
"Sending" and "receiving" in embodiments of this application represent signal transfer directions. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface or indirect receiving from the network device from another unit or module through an air interface. "Sending" may also be understood as "outputting" from a chip interface, and "receiving" may also be understood as "inputting" into the chip interface.

In other words, sending and receiving may be performed between devices, for example, between a network device and a terminal device; or may be performed in a device, for example, sending or receiving is performed between components, modules, chips, software modules, or hardware modules in the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, by directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated based on an arrangement sequence of pieces of information that is pre-agreed on (for example, predefined in a protocol), to reduce indication overheads to some extent. A specific indication manner is not limited in this application. It may be understood that, for a sender of the indication information, the indication information may indicate the to-be-indicated information, and for a receiver of the indication information, the indication information may be used to determine the to-be-indicated information.

II. First type of technical problem resolved in this application and first communication method used to resolve the first type of technical problem.
1. The following uses FIG. 1 as an example to describe the first type of problem resolved in this application. For the control device in FIG. 1, when the control device needs to manage all links (for example, including all links of the first MLD set and the second MLD set) in the entire distributed MLD network, a centralized control function is too complex, which is not easy to implement, and is not conducive to further expansion of a network scale.
2. To resolve the first type of technical problem, this section provides the first communication method, and the method can simplify the centralized control function of the control device. For example, the control device does not need to control data service transmission in an MLD set, and only needs to be responsible for coarse-grained control between MLD sets (for example, controlling user information synchronization between different MLDs, which helps simplify an operation and the like when a non-AP MLD roams between different MLDs). The first communication method may be applied to, but not limited to, the communication system or device shown in FIG. 1 or FIG. 2.

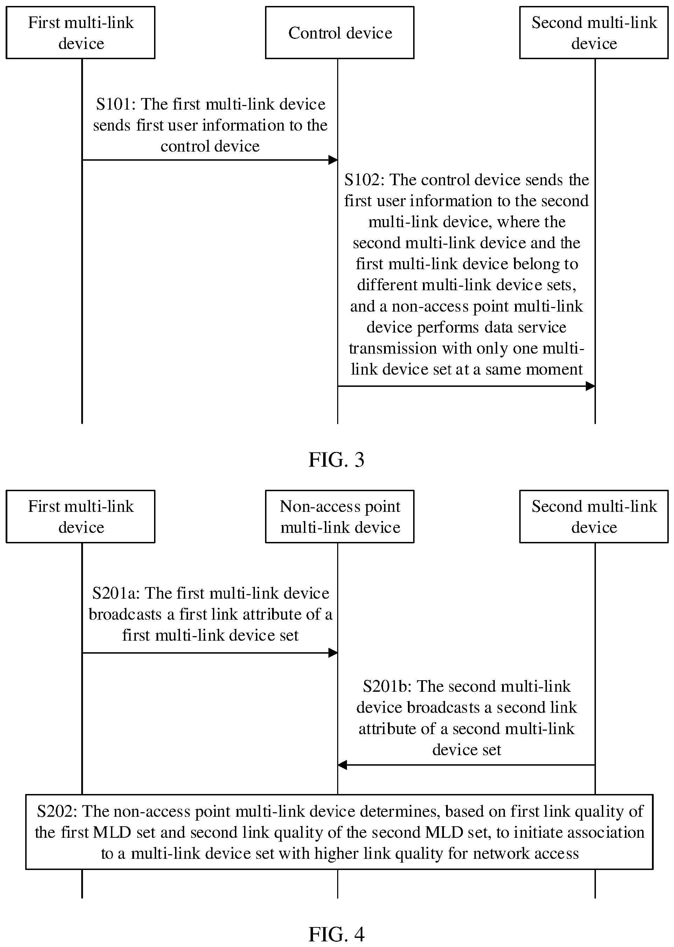

For example, FIG. 3 is a schematic flowchart of the first communication method according to this application. The method may be implemented through interaction between the control device, a first multi-link device, and a second multi-link device, and includes the following steps.

S101: The first multi-link device sends first user information to the control device, and correspondingly, the control device receives the first user information from the first multi-link device.

The first user information includes one or more of address information of a non-AP MLD that performs data service transmission with the first MLD, a quantity of links of the non-AP MLD, a link capability of the non-AP MLD, a quantity of links of the first MLD, and a link capability of the first MLD.

For example, the non-AP MLD that performs data service transmission with the first MLD refers to a non-AP MLD associated with the first MLD, as shown by the non-access point multi-link device in FIG. 1. It is assumed that in an initial state, the non-AP MLD has not accessed a distributed MLD network. In this application, it is limited that the non-AP MLD performs data service transmission with only one MLD set at a same moment. In this case, in the initial state, the non-AP MLD may scan and sense respective link information (for example, including information such as a quantity of links and a link capability of each MLD set) of a plurality of MLD sets in the entire distributed MLD network, and record and maintain the respective link information of the plurality of MLD sets. In addition, the non-AP MLD may autonomously select, based on a scanning result (for example, signal quality of a received signal), an MLD set (for example, the first MLD set in FIG. 1) with highest signal quality (for example, highest signal strength) to initiate association for network access. After the non-AP MLD accesses the network through association, the non-AP MLD performs data service transmission with only the associated MLD set at a same moment (for example, the non-AP MLD performs data service transmission with only the first MLD in the first MLD set at a same moment). Optionally, during movement, the non-AP MLD may continue to maintain the respective link information of the plurality of MLD sets. Optionally, during movement, the non-AP MLD may continue scanning, and determine, based on a scanning result (for example, received signal strength), whether to roam from one MLD set to another MLD set.

Optionally, before S101, an operation of initiating, by the non-AP MLD, association to the first MLD set for network access is further included. For example, the non-AP MLD determines, based on the scanning result, that signal quality of the first MLD in the first MLD set is the highest, and sends an association request message to the first MLD. Correspondingly, the first MLD receives the association request message. The first MLD may send an association response message to the non-AP MLD, to allow the non-AP MLD to access the network through association. The non-AP MLD joins the first MLD set, and performs data service transmission with only the first MLD set at a same moment. In this application, specific data service transmission is no longer controlled by the control device, but is controlled by an MLD set, which helps simplify a centralized control function of the control device.

The address information of the non-AP MLD includes, but is not limited to, a physical address (for example, a media access control (media access control, MAC) address) of the non-AP MLD, respective physical addresses of links of the non-AP MLD, and the like. The link capability of the non-AP MLD is a link frequency band supported by the non-AP MLD. For example, the link frequency band supported by the non-AP MLD may include, but is not limited to, a 2.4 GHz frequency band (2.4G for short), a 5 GHz high frequency band (5G_H for short), and a 5 GHz low frequency band (5G_L for short). The quantity of links the non-AP MLD is a total quantity of links supported by the non-AP MLD. For example, if the link frequency band supported by the non-AP MLD includes 2.4G, 5G_H, and 5G_L, the quantity of links of the non-AP MLD is 3.

A definition of the link capability of the first MLD is similar to that of the link capability of the non-AP MLD, and is a link frequency band supported by the first MLD. For example, the link frequency band supported by the first MLD may include, but is not limited to, 2.4G, 5G_H, and 5G_L. A definition of the quantity of links of the first MLD is similar to that of the quantity of links of the non-AP MLD, and is a total quantity of links supported by the first MLD. For example, if the link frequency band supported by the first MLD includes 2.4G, 5G_H, and 5G_L, the quantity of links of the first MLD is 3.

Optionally, in the initial state, it is assumed that the non-AP MLD has not initiated association to the first MLD set for network access, and it is assumed that the link capability and the quantity of links of the non-AP MLD are different from the link capability and the quantity of links of the first MLD. For example, it is assumed that the link frequency band supported by the non-AP MLD includes 2.4G, 5G_H, and 5G_L, and the quantity of links of the non-AP MLD is 3; and it is assumed that the link frequency band supported by the first MLD includes 2.4G and 5G_L, and the quantity of links of the first MLD is 2. After the non-AP MLD initiates association to the first MLD set for network access and is associated with the first MLD, the link capability and the quantity of links in the first user information generated by the first MLD include an intersection of the link capability of the first MLD and the link capability of the non-AP MLD, and an intersection of the quantity of links of the first MLD and the quantity of links of the non-AP MLD. For example, in the first user information, the quantity of links of the non-AP MLD is 2, the link capability of the non-AP MLD indicates that the supported link frequency band includes 2.4G and 5G_L, the quantity of links of the first MLD is 2, and the link capability of the first MLD indicates that the supported link frequency band includes 2.4G and 5G_L.

S102: The control device sends the first user information to the second multi-link device, where the second multi-link device and the first multi-link device belong to different multi-link device sets, and the non-access point multi-link device performs data service transmission with only one multi-link device set at a same moment.

The control device may control user information synchronization between different MLD sets, which helps simplify an operation when the non-AP MLD roams between different MLD sets. For example, the control device sends the first user information to the second MLD, so that user information synchronization between different MLD sets is implemented. For the second MLD, the first user information is used by the second MLD to determine second user information for performing data service transmission with the non-AP MLD. For example, although the non-AP MLD performs data service transmission with only the first MLD at a current moment, during movement, the non-AP MLD may continue to maintain the respective link information of the plurality of MLD sets, and determine, based on respective scanning results of the plurality of MLD sets, whether to roam from one MLD set to another MLD set. If the non-AP MLD needs to roam to the second MLD set, because the second MLD set has obtained the first user information (for example, has obtained the address information of the non-AP MLD, the quantity of links of the non-AP MLD, and the link capability of the non-AP MLD), the information does not need to be synchronized again in a roaming phase of the non-AP MLD, which helps reduce processing overheads.

Optionally, the control device may further control user aggregation information synchronization between different MLD sets. User aggregation information is information generated by aggregating a plurality of data frames of a same user after the user is associated. For example, after the non-AP MLD is associated with the first MLD, a multi-link connection may be established between the non-AP MLD and the first MLD, and a plurality of data frames may be transmitted on a plurality of links. The first MLD may aggregate the plurality of data frames to generate first user aggregation information, and send the first user aggregation information to the control device. Optionally, the first user aggregation information may also be sent by the control device to the second MLD.

In this embodiment, it is limited that one non-AP MLD performs data service transmission with only one MLD set at a same moment. In this case, control of data service transmission of the non-AP MLD may be performed by each MLD set, and centralized control of the control device is not required. Therefore, the centralized control function of the control device may be simplified as that the control device is responsible for user information synchronization, user aggregation information synchronization, and the like between MLD sets, which helps simplify an operation when the non-AP MLD roams between different MLDs.

3. In an example, the control device may further control key information synchronization between different MLD sets.

For example, the first communication method further includes the following steps.
(1) The control device receives physical addresses of links of all MLD sets.
   For example, the control device may receive physical addresses of all links of the first MLD set and physical addresses of all links of the second MLD set.
(2) The control device determines a multicast key of each link based on the physical addresses of the links of all the MLD sets.
   For example, the control device may use a method for determining a multicast key of a link based on a MAC address of the link in an existing protocol. This is not limited in this application.
(3) The control device determines a unicast key of the non-AP MLD based on the address information of the non-AP MLD.

For example, the control device may use a method for determining a unicast key of a non-AP MLD based on address information of the non-AP MLD in the existing protocol. This is not limited in this application.

Therefore, based on the foregoing steps (1) to (3), the control device may generate multicast keys of the plurality of MLD sets and the unicast key of the non-AP MLD. The control device may control key information synchronization between different MLD sets.

In a possible implementation, in an association phase of the non-AP MLD, the first MLD associated with the non-AP MLD may request the control device to obtain a multicast key of each link of the first MLD and the unicast key of the non-AP MLD. For example, the first communication method further includes the following steps: The first MLD sends a first request message to the control device, where the first request message is used to request to obtain first key information of the first MLD. Correspondingly, the control device receives the first request message. The control device sends the multicast key of each link of the first MLD and the unicast key of the non-AP MLD to the first MLD.

In another possible implementation, in an association phase of the non-AP MLD, the first MLD associated with the non-AP MLD may request the control device to obtain key information of another MLD set in the distributed MLD network, to implement key information synchronization. For example, the first communication method further includes the following steps: The first MLD sends a second request message to the control device, where the second request message is used to request to obtain second key information of the second MLD. Correspondingly, the control device receives the second request message. The control device sends a multicast key of each link of the second MLD set to the first MLD. Optionally, the first MLD may further request the control device to obtain key information of all the MLD sets in the distributed MLD network, to implement key information synchronization.

Optionally, the non-AP MLD may also obtain key information of an MLD set. For example, the non-AP MLD sends a fourth request message to the first MLD, where the fourth request message is used to request to roam to the second MLD. The non-AP MLD receives a fourth response message from the first MLD. The non-AP MLD performs an operation of roaming to the second MLD. The non-AP MLD exchanges a unicast encrypted management frame with the second MLD, to obtain the multicast key of each link of the second MLD.

In this example, the control device may further control key information synchronization between different MLD sets, so that the key information does not need to be synchronized again in the roaming phase of the non-AP MLD, which helps reduce processing overheads.

4. In an example, the control device may further control data service switching between different MLD sets.

For example, the first communication method further includes the following step: The control device sends first indication information to the first MLD, where the first indication information indicates the first MLD to switch a data service of the non-AP MLD to the second MLD for transmission. The control device may be responsible for controlling data service switching between MLD sets in the roaming phase of the non-AP MLD, in other words, controlling packet migration between MLD sets.

In this example, the control device may further control data service switching between different MLD sets, thereby implementing centralized control and simplifying a data service switching procedure.

III. Second type of technical problem resolved in this application and second communication method used to resolve the second type of technical problem.
1. The following uses FIG. 1 as an example to describe the second type of problem resolved in this application. For each link in each MLD set in FIG. 1, currently, information about all links in the entire distributed MLD network needs to be broadcast. For example, for the link N1 in the first MLD set, link information of all links (including all links in the first MLD set and all links in the second MLD set) in the entire network needs to be broadcast. The link information may be collected by the control device and delivered by the control device to each MLD set. When a network scale is large, a frame body that carries link information on each link, for example, a beacon (beacon) frame, a probe response (probe response) frame, or an association response (assoc response) frame, cannot carry the information about all the links.
2. To resolve the second type of technical problem, this section provides the second communication method. In the method, it is limited that for each link in each MLD set, only information about all links in the MLD set to which the link belongs is broadcast, and the information about all the links in the entire distributed MLD network is not broadcast. This helps reduce information carried in a frame body on each link.

For example, FIG. 4 is a diagram of the second communication method according to this application. The method may be implemented through interaction between a first multi-link device, a second multi-link device, and a non-access point multi-link device, and includes the following steps.

S201a: The first multi-link device broadcasts a first link attribute of the first multi-link device set, where the first link attribute includes one or more of link identifiers, link capabilities, and physical addresses of all the links in the first multi-link device set, and the first multi-link device belongs to the first multi-link device set. Correspondingly, the non-access point multi-link device receives the first link attribute.

S201b: The second multi-link device broadcasts a second link attribute of the second multi-link device set, where the second link attribute includes one or more of link identifiers, link capabilities, and physical addresses of all the links in the second multi-link device set, and the second multi-link device belongs to the second multi-link device set. Correspondingly, the non-access point multi-link device receives the second link attribute.

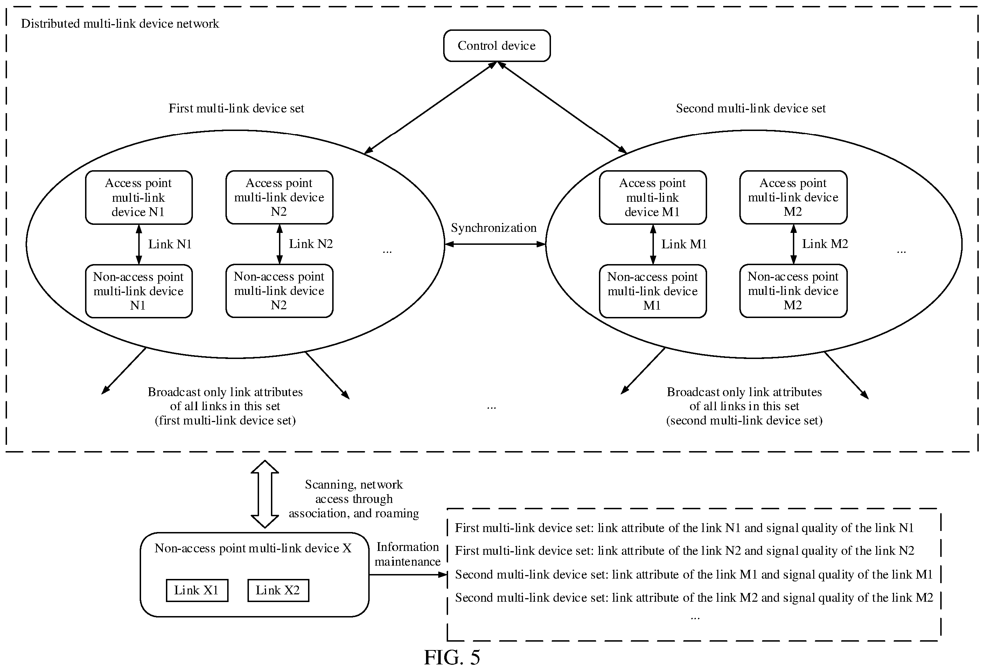

The first link attribute or the second link attribute is carried in one or more of the following frame bodies: a beacon frame, a probe response frame, and an assoc response frame. Because an amount of information that can be carried in the frame body is limited, in this application, it is limited that for each link in each MLD set, only link attributes of all links in the MLD set to which the link belongs are broadcast, and link attributes of all the links in the entire distributed MLD network are not broadcast. This reduces an amount of information, and resolves a problem that frame bodies of frames such as beacon, probe resp, and assoc resp cannot carry the information. For example, FIG. 5 is a diagram of a multi-link device set broadcasting a link attribute and interacting with a non-access point multi-link device according to this application. The first MLD broadcasts only link attributes of all the links in the first MLD set, and the second MLD broadcasts only link attributes of all the links in the second MLD set. During scanning, the non-AP MLD may sense information about each MLD set in the entire distributed MLD network; and the non-AP MLD may record and maintain the link attributes of all the links, as shown in FIG. 5. For a method for performing scanning by the non-AP MLD, refer to the scanning method described in the protocol. This is not limited in this application.

The link identifier of the link is a unique identifier of each link, and is used to distinguish between different links. For example, the link identifier may be referred to as a link identity (link ID). For definitions of the link capability and the physical address of the link, refer to corresponding descriptions in the section II. Details are not described herein again.

Optionally, an execution sequence of S201a and S201b is not limited in this application. For example, S201a may be performed before S201b, or S201b may be performed before S201a, or S201a and S201b may be simultaneously performed.

S202: The non-access point multi-link device determines, based on first link quality of the first MLD set and second link quality of the second MLD set, to initiate association to a multi-link device set with higher link quality for network access.

For example, the non-AP MLD may autonomously select, based on a scanning result, an MLD set with highest signal quality to initiate association for network access. Specifically, that the non-AP MLD initiates association to the MLD set for network access may be that the non-AP MLD sends a third request message to the first MLD, where the third request message is used to request to initiate association to the first MLD for network access.

Optionally, signal quality of all links in an MLD set may be evaluated by using indicators such as signal strength and reference signal received power (reference signal received power, RSRP) of the links. This is not limited in this application. For example, the non-AP MLD compares a first signal strength value in the first link quality with a second signal strength value in the second link quality, and if the first signal strength value is greater than the second signal strength value, the non-AP MLD initiates association to the first MLD set for network access. The first signal strength value may include respective signal strength of a plurality of links of the first MLD, or may be a maximum signal strength value of the plurality of links of the first MLD.

Optionally, during movement of the non-AP MLD, the non-AP MLD may continue to maintain link quality of a plurality of MLD sets, and determine, based on a plurality of pieces of link quality of the plurality of MLD sets, whether to roam from one MLD set to another MLD subset.

Optionally, during movement of the non-AP MLD, the non-AP MLD may update link quality of one or more MLDs. The non-AP MLD determines, based on updated link quality of the one or more MLDs, to roam to the second MLD. Updated link quality of the second MLD is higher than link quality of the first MLD.

Optionally, the second communication method may be separately performed, or may be performed with reference to the first communication method. For example, the first MLD and the second MLD may separately broadcast respective link attributes. In a roaming phase of the non-AP MLD, the non-AP MLD selects, based on the plurality of pieces of link quality of the plurality of MLD sets, an MLD to which the non-AP MLD roams, and the control device may control the corresponding MLD to perform data service switching.

In this embodiment, for the link in each MLD set, only the link attributes of all the links in the MLD set to which the link belongs are broadcast, rather than the link attributes of all the links in all the MLD sets being broadcast. This helps reduce signaling overheads.

IV. Third type of technical problem resolved in this application and third communication method used to resolve the third type of technical problem.
1. The following describes the third type of problem resolved in this application. A link asymmetry scenario may exist between MLD sets. For example, it is assumed that a link frequency band supported by a first MLD set includes 2.4G, 5G_H, and 5G_L, and a quantity of links of the first MLD set is 3; a link frequency band supported by a second MLD set includes 2.4G and 5G_L, and a quantity of links of the second MLD set is 2; and a link frequency band supported by a non-AP MLD includes 2.4G, 5G_H, and 5G_L, and a quantity of links of the non-AP MLD is 3. It is assumed that the non-AP MLD performs data service transmission with the first MLD set at a first moment, and during movement of the non-AP MLD, the non-AP MLD determines that the non-AP MLD can roam to the second MLD set. However, the second MLD set does not have a specific link capability (for example, does not support the 5G_H frequency band). In this case, the non-AP MLD needs to perform a link re-association operation in a roaming phase, and consequently implementation complexity is high.
2. To resolve the third type of technical problem, this section provides the third communication method. In the method, a concept of a virtual link is introduced for the link asymmetry scenario. If an MLD set does not have a specific link capability, the MLD set may create a corresponding virtual link, so that all link capabilities in each MLD set are the same. In this way, the non-AP MLD can obtain a maximum physical link capability of the MLD set in an association phase. In addition, in a roaming phase of the non-AP MLD, only switching between a virtual link and a physical link needs to be handled, and a link re-association operation does not need to be performed, thereby reducing implementation complexity. The third communication method may be applied to, but not limited to, the communication system or device shown in FIG. 1 or FIG. 2.

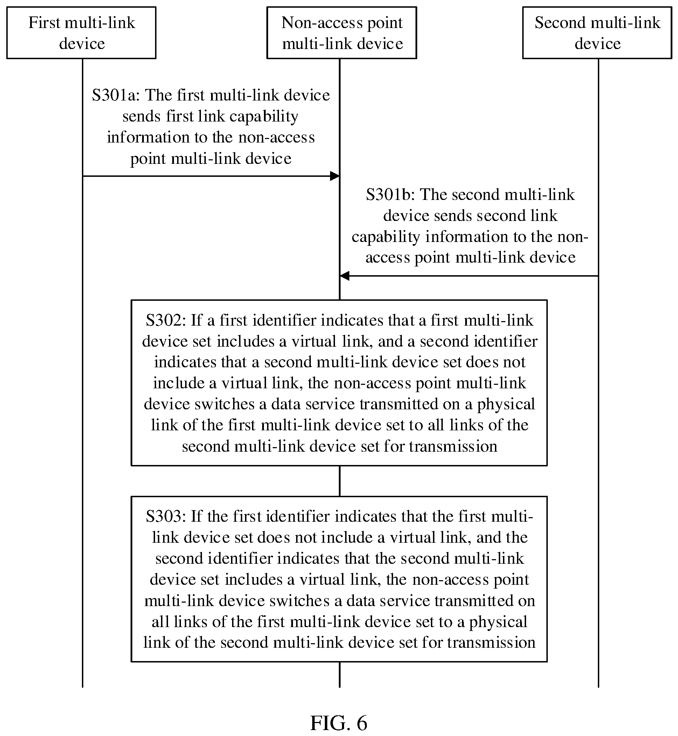

For example, FIG. 6 is a schematic flowchart of the third communication method according to this application. The method may be implemented through interaction between a first multi-link device, a second multi-link device, and the non-access point multi-link device, and includes the following steps.

S301a: The first multi-link device sends first link capability information to the non-access point multi-link device, and correspondingly, the non-access point multi-link device receives the first link capability information.

S301b: The second multi-link device sends second link capability information to the non-access point multi-link device, and correspondingly, the non-access point multi-link device receives the second link capability information.

The first link capability information includes a first identifier indicating whether the link of the first MLD set is a physical link or a virtual link, and/or a link capability of each link. For example, it is assumed that a link frequency band supported by the first MLD includes 2.4G, 5G_H, and 5G_L, and a quantity of links of the first MLD is 3. In this case, the first identifier indicates that all links of the first MLD set are physical links.

The second link capability information includes a second identifier indicating whether the link of the second MLD set is a physical link or a virtual link, and/or a link capability of each link. For example, it is assumed that a link frequency band supported by the second MLD set includes 2.4G and 5G_L, and a quantity of links of the second MLD set is 2. In this case, the second MLD set does not support the 5G_H frequency band, and the second MLD set may create a virtual link. The virtual link is not used for data service transmission.

Optionally, before S301a or S301b, a control device may collect physical link capabilities of a plurality of MLD sets, determine a maximum physical link capability, and then send second indication information to the plurality of MLD sets, where the second indication information indicates the maximum physical link capability. Therefore, if the second MLD set does not support the 5G_H frequency band, and the second MLD set has known the maximum physical link capability, the second MLD set may create the virtual link.

Optionally, before S301a or S301b, it is assumed that the non-AP MLD has been associated with the first MLD set and performs data service transmission with the first MLD set.

Optionally, the first identifier, the second identifier, or the second indication information is carried in one or more of the following frame bodies: a beacon frame, a probe response frame, and an assoc response frame. For example, the first identifier or the second identifier may be indicated by using one or more of the beacon frame, the probe response frame, and the assoc response frame.

Optionally, an execution sequence of S301a and S301b is not limited in this application. For example, S301a may be performed before S301b, or S301b may be performed before S301a, or S301a and S301b may be simultaneously performed.

S302: If the first identifier indicates that the first multi-link device set includes a virtual link, and the second identifier indicates that the second multi-link device set does not include a virtual link, the non-access point multi-link device switches a data service transmitted on a physical link of the first multi-link device set to all links of the second multi-link device set for transmission.

S303: If the first identifier indicates that the first multi-link device set does not include a virtual link, and the second identifier indicates that the second multi-link device set includes a virtual link, the non-access point multi-link device switches a data service transmitted on all links of the first multi-link device set to a physical link of the second multi-link device set for transmission.

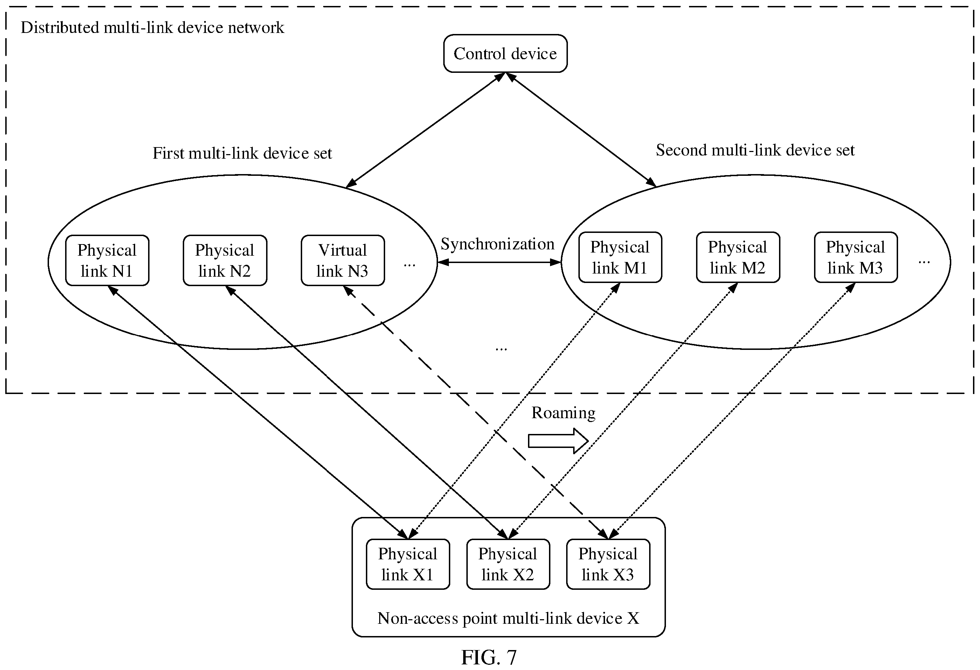

For example, FIG. 7 is a diagram of switching between physical links and virtual links between multi-link device sets according to this application. The first MLD set includes physical links N1 and N2, the second MLD set includes physical links M1 to M3, and the non-AP MLD includes physical links X1 to X3. The control device may indicate the maximum physical link capability by using the second indication information, and the first MLD may create a virtual link N3. It is assumed that the non-AP MLD performs data service transmission with the first MLD set at a first moment. In this case, because the virtual link cannot be used for data service transmission, a data service between the non-AP MLD and the first MLD set is transmitted only on the physical links N1 and N2 (that is, X1 and X2). After movement, when the non-AP MLD determines that the non-AP MLD can roam to the second MLD set, the non-AP MLD may switch the physical links X1 to X3 to the physical links M1 to M3 respectively. In addition, a data service between the non-AP MLD and the second MLD set may be transmitted on all physical links.

Optionally, it is assumed that the non-AP MLD performs data service transmission with the second MLD set at a first moment, and performs data transmission with the first MLD set after roaming. In this case, the non-AP MLD may switch the physical links X1 to X3 to the physical links N1 and N2 and the virtual link N3 respectively. In addition, a data service between the non-AP MLD and the first MLD set is transmitted only on the physical links N1 and N2. A diagram of this procedure is similar to that in FIG. 7.

Optionally, switching between the virtual link and the physical link may be implemented by the non-AP MLD by extending traffic identifier (traffic ID, TID)-to-link mapping (tid_to_link_mapping). tid_to_link_mapping is used to specify a link to which a TID service is mapped for transmission. However, the virtual link in this application cannot be used for service transmission. For example, as shown in FIG. 7, the data service of the non-AP MLD needs to be switched from the first MLD set to the second MLD set for transmission. In this case, the service on the physical links N1 and N2 is mapped from the first MLD set to the physical links M1 to M3 in the second MLD set through tid_to_link_mapping.

Optionally, the third communication method may be separately performed, or may be performed with reference to the first communication method or the second communication method. For example, the control device may receive respective physical link capabilities of a plurality of MLDs in all MLD sets, and determine a maximum value of the respective physical link capabilities of the plurality of MLDs as a maximum physical link capability. The control device sends second indication information to the plurality of MLDs, where the second indication information indicates the maximum physical link capability, and the plurality of MLDs include the first MLD and the second MLD. If a link capability of the first MLD is less than the maximum physical link capability, the first MLD creates a virtual link.

In this embodiment, the concept of a virtual link is introduced for the link asymmetry scenario. If an MLD set does not have a specific link capability, the MLD set may create a corresponding virtual link, so that all link capabilities in each MLD set are the same. In this way, the non-AP MLD can obtain a maximum physical link capability of the MLD set in an association phase. In addition, in a roaming phase of the non-AP MLD, only switching between a virtual link and a physical link needs to be handled, and a link re-association operation does not need to be performed, thereby reducing implementation complexity.

To implement functions in the methods provided in this application, the apparatus or the device provided in this application may include a hardware structure and/or a software module, to implement the foregoing functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions. Division into modules in this application is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

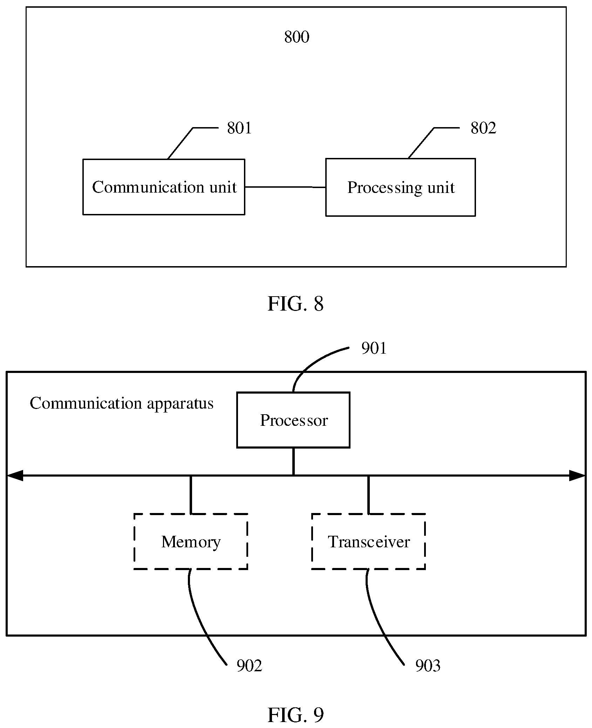

FIG. 8 is a diagram of a communication apparatus according to this application. The apparatus may include a one-to-one corresponding module for performing the method/operation/step/action described in any one of the embodiments shown in FIG. 3 to FIG. 7. The module may be a hardware circuit, or may be software, or may be implemented by a hardware circuit in combination with software.

The apparatus 800 includes a communication unit 801 and a processing unit 802, configured to implement the method performed by each device in the foregoing embodiments. The communication unit 801 is also referred to as a transceiver unit. The transceiver unit includes a sending unit and a receiving unit. The sending unit is configured to send a signal, and the receiving unit is configured to receive a signal.

In a possible implementation, the apparatus may be a control device, may be an apparatus of the control device, or may be an apparatus that can be used together with the control device. Specifically, the communication unit 801 is configured to receive first user information from a first multi-link device MLD, where the first user information includes one or more of address information of a non-access point multi-link device non-AP MLD that performs data service transmission with the first MLD, a quantity of links of the non-AP MLD, a link capability of the non-AP MLD, a quantity of links of the first MLD, and a link capability of the first MLD. The communication unit 801 is further configured to send the first user information to a second MLD, where the second MLD and the first MLD belong to different MLD sets, the non-AP MLD performs data service transmission with only one MLD set at a same moment, and the first user information is used by the second MLD to determine second user information for performing data service transmission with the non-AP MLD.

Optionally, the processing unit 802 is configured to determine a multicast key of each link based on physical addresses of links of all MLD sets.

For specific execution procedures of the communication unit 801 and the processing unit 802 in this implementation, refer to the descriptions of the steps performed by the control device in the method embodiments and related descriptions. Details are not described herein again. The communication method implemented by the apparatus can simplify a centralized control function of the control device. For example, the centralized control function of the control device may be simplified as that the control device is responsible for coarse-grained control between MLD sets (for example, controlling user information synchronization between different MLDs, which helps simplify an operation and the like when the non-AP MLD roams between different MLDs).

In a possible implementation, the apparatus may be a multi-link device, may be an apparatus of the multi-link device, or may be an apparatus that can be used together with the multi-link device. Specifically, the processing unit 802 is configured to determine first user information, where the first user information includes one or more of address information of a non-AP MLD that performs data service transmission with a first MLD, a quantity of links of the non-AP MLD, a link capability of the non-AP MLD, a quantity of links of the first MLD, and a link capability of the first MLD. The communication unit 801 is configured to send the first user information to a control device, where the first user information is used by a second MLD to determine second user information for performing data service transmission with the non-AP MLD, the second MLD and the first MLD belong to different MLD sets, and the non-AP MLD performs data service transmission with only one MLD set at a same moment.

For specific execution procedures of the communication unit 801 and the processing unit 802 in this implementation, refer to the descriptions of the steps performed by the multi-link device in the method embodiments and related descriptions. Details are not described herein again. In the communication method implemented by the apparatus, the first user information may be sent to the control device, to help the control device collect user information of all MLD sets, and therefore help the control device share the user information between different MLD sets.

In a possible implementation, the apparatus may be a non-access point device, may be an apparatus of the non-access point device, or may be an apparatus that can be used together with the non-access point device. Specifically, the communication unit 801 is configured to send a third request message to a first MLD, where the third request message is used to request to initiate association to the first MLD for network access. The communication unit 801 is further configured to receive first user information from the first MLD, where the first user information includes one or more of address information of a non-AP MLD, a quantity of links of the non-AP MLD, a link capability of the non-AP MLD, a quantity of links of the first MLD, and a link capability of the first MLD. The first user information is used by a second MLD managed by a control device to determine second user information for performing data service transmission with the non-AP MLD, the second MLD and the first MLD belong to different MLD sets, and the non-AP MLD performs data service transmission with only one MLD set at a same moment.

Optionally, the processing unit 802 is configured to switch a data service transmitted on a physical link of the first MLD to all links of the second MLD for transmission.

For specific execution procedures of the communication unit 801 and the processing unit 802 in this implementation, refer to the descriptions of the steps performed by the non-access point multi-link device in the method embodiments and related descriptions. Details are not described herein again. In the communication method implemented by the apparatus, it is limited that the non-AP MLD can initiate association to only an MLD in one MLD set for network access and perform data service transmission with only one MLD set at a same moment. This helps simplify a centralized control function of the control device.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 9 is another diagram of a structure of a communication apparatus according to an embodiment of this application. The communication apparatus may be configured to perform steps performed by the control device, the multi-link device, or the non-access point multi-link device in the foregoing method embodiments. For details, refer to related descriptions in the method embodiments.

The communication apparatus includes a processor 901. Optionally, the communication apparatus further includes a memory 902 and a transceiver 903.

In a possible implementation, the processor 901, the memory 902, and the transceiver 903 are separately connected through a bus, and the memory stores computer instructions.

Optionally, the processing unit 802 in the foregoing embodiment may be specifically the processor 901 in this embodiment. Therefore, a specific implementation of the processor 901 is not described again. The communication unit 801 in the foregoing embodiment may be specifically the transceiver 903 in this embodiment. Therefore, a specific implementation of the transceiver 903 is not described again.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly performed and completed by a hardware processor, or may be performed and completed by using a combination of hardware in the processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in an instruction form or a data structure form and that can be accessed by a computer. However, the memory is not limited thereto. The memory in this application may alternatively be a circuit or any other apparatus that can implement a storage function, and is configured to store program instructions and/or data.

This application provides another communication apparatus. The device includes a processor and an interface. Optionally, the apparatus further includes a memory. The processor is coupled to the memory. The processor is configured to read and execute computer instructions stored in the memory, to implement the communication method in the embodiments shown in FIG. 3 to FIG. 7.

An embodiment of this application further provides a communication system. The communication system includes one or more of a control device, a multi-link device, and a non-access point multi-link device, to implement the communication method in the embodiments shown in FIG. 3 to FIG. 7.

This application provides a computer-readable storage medium. The computer-readable storage medium stores a program or instructions. When the program or the instructions are run on a computer, the computer is enabled to perform the communication method in the embodiments shown in FIG. 3 to FIG. 7.

This application provides a computer program product. The computer program product includes instructions. When the instructions are run on a computer, the computer is enabled to perform the communication method in the embodiments shown in FIG. 3 to FIG. 7.

This application provides a chip or a chip system. The chip or the chip system includes at least one processor and an interface. The interface and the at least one processor are interconnected via a line. The at least one processor is configured to run a computer program or instructions, to perform the communication method in the embodiments shown in FIG. 3 to FIG. 7.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, a network device, a terminal, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, that integrates one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference may be made between embodiments. For example, mutual reference may be made between methods and/or terms in method embodiments, mutual reference may be made between functions and/or terms in apparatus embodiments, and mutual reference may be made between functions and/or terms in the apparatus embodiments and the method embodiments.

Clearly, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, comprising:
receiving, by a control device, first user information from a first multi-link device MLD, wherein the first user information comprises one or more of address information of a non-access point multi-link device non-AP MLD that performs data service transmission with the first MLD, a quantity of links of the non-AP MLD, a link capability of the non-AP MLD, a quantity of links of the first MLD, and a link capability of the first MLD; and
sending, by the control device, the first user information to a second MLD, wherein the second MLD and the first MLD belong to different MLD sets, the non-AP MLD performs data service transmission with only one MLD set at a same moment, and the first user information is used by the second MLD to determine second user information for performing data service transmission with the non-AP MLD.

2. The method according to claim 1, wherein the method further comprises:
receiving, by the control device, physical addresses of links of all MLD sets;
determining, by the control device, a multicast key of each link based on the physical addresses of the links of all the MLD sets; and
determining, by the control device, a unicast key of the non-AP MLD based on the address information of the non-AP MLD.

3. The method according to claim 2, wherein the method further comprises:
receiving, by the control device, a first request message from the first MLD, wherein the first request message is used to request to obtain first key information of the first MLD; and
sending, by the control device, a multicast key of each link of the first MLD set and the unicast key of the non-AP MLD to the first MLD.

4. The method according to claim 2, wherein the method further comprises:
receiving, by the control device, a second request message from the first MLD, wherein the second request message is used to request to obtain second key information of the second MLD set; and
sending, by the control device, a multicast key of each link of the second MLD set to the first MLD.

5. The method according to claim 1 or 2, wherein the method further comprises:
sending, by the control device, first indication information to the first MLD set, wherein the first indication information indicates the first MLD to switch a data service of the non-AP MLD to the second MLD for transmission.

6. The method according to claim 1, wherein before receiving, by the control device, the first user information, the method further comprises:
receiving, by the control device, respective physical link capabilities of a plurality of MLDs in all MLD sets;
determining, by the control device, that a maximum value of the respective physical link capabilities of the plurality of MLDs is a maximum physical link capability; and
sending, by the control device, second indication information to the plurality of MLDs, wherein the second indication information indicates the maximum physical link capability, and the plurality of MLDs comprise the first MLD and the second MLD.

7. A communication method, comprising:
determining, by a first MLD, first user information, wherein the first user information comprises one or more of address information of a non-AP MLD that performs data service transmission with the first MLD, a quantity of links of the non-AP MLD, a link capability of the non-AP MLD, a quantity of links of the first MLD, and a link capability of the first MLD; and
sending, by the first MLD, the first user information to a control device, wherein the first user information is used by the second MLD to determine second user information for performing data service transmission with the non-AP MLD, the second MLD and the first MLD belong to different MLD sets, and the non-AP MLD performs data service transmission with only one MLD set at a same moment.

8. The method according to claim 7, wherein the method further comprises:
sending, by the first MLD, a physical address of a link of a first MLD set to the control device, wherein the first MLD belongs to the first MLD set, and the physical address of the link of the first MLD set is used to determine a multicast key of each link of the first MLD set.

9. The method according to claim 8, wherein the method further comprises:
sending, by the first MLD, a first request message to the control device, wherein the first request message is used to request to obtain first key information of the first MLD;
receiving, by the first MLD, a multicast key of each link of the first MLD and a unicast key of the non-AP MLD; and
sending, by the first MLD, the multicast key of each link of the first MLD and the unicast key of the non-AP MLD to the non-AP MLD.

10. The method according to claim 8, wherein the method further comprises:
sending, by the first MLD, a second request message to the control device, wherein the second request message is used to request to obtain second key information of the second MLD;
receiving, by the first MLD, a multicast key of each link of the second MLD; and
sending, by the first MLD, the multicast key of each link of the second MLD to the non-AP MLD.

11. The method according to claim 7 or 8, wherein the method further comprises:
receiving, by the first MLD, first indication information from the control device, wherein the first indication information indicates the first MLD to switch a data service of the non-AP MLD to the second MLD for transmission; and
sending, by the first MLD, the first indication information to the non-AP MLD.

12. The method according to claim 7, wherein before sending, by the first MLD, the first user information to the control device, the method further comprises:
sending, by the first MLD, a physical link capability of the first MLD to the control device;
receiving, by the first MLD, second indication information from the control device, wherein the second indication information indicates a maximum physical link capability, and the maximum physical link capability is a maximum value of respective physical link capabilities of a plurality of MLDs managed by the control device; and
if the link capability of the first MLD is less than the maximum physical link capability, creating, by the first MLD, a virtual link.

13. The method according to claim 12, wherein the method further comprises:
sending, by the first MLD, first link capability information to the second MLD and the non-AP MLD, wherein the first link capability information comprises a first identifier indicating whether the link of the first MLD is a physical link or a virtual link, and/or a link capability of each link.

14. A communication method, comprising:
sending, by a non-AP MLD, a third request message to a first MLD, wherein the third request message is used to request to initiate association to the first MLD for network access; and
receiving, by the non-AP MLD, first user information from the first MLD, wherein the first user information comprises one or more of address information of the non-AP MLD, a quantity of links of the non-AP MLD, a link capability of the non-AP MLD, a quantity of links of the first MLD, and a link capability of the first MLD; and
the first user information is used by a second MLD managed by a control device to determine second user information for performing data service transmission with the non-AP MLD, the second MLD and the first MLD belong to different MLD sets, and the non-AP MLD performs data service transmission with only one MLD set at a same moment.

15. The method according to claim 14, wherein the method further comprises:
receiving, by the non-AP MLD, a multicast key of each link of the first MLD and a unicast key of the non-AP MLD.

16. The method according to claim 14, wherein the method further comprises:
receiving, by the non-AP MLD, a multicast key of each link of the second MLD from the first MLD.

17. The method according to claim 14, wherein the method further comprises:
receiving, by the non-AP MLD, first indication information from the first MLD, wherein the first indication information indicates the first MLD to switch a data service of the non-AP MLD to the second MLD for transmission.

18. The method according to claim 14, wherein before receiving, by the non-AP MLD, the first user information from the first MLD, the method further comprises:
receiving, by the non-AP MLD, first link capability information of the first MLD, wherein the first link capability information comprises a first identifier indicating whether the link of the first MLD is a physical link or a virtual link, and/or a link capability of each link.

19. The method according to claim 17 or 18, wherein the method further comprises:
receiving, by the non-AP MLD, second link capability information of the second MLD, wherein the second link capability information comprises a second identifier indicating whether a link of the second MLD is a physical link or a virtual link, and/or a link capability of each link; and
if the first identifier indicates that the first MLD comprises a virtual link, and the second identifier indicates that the second MLD does not comprise a virtual link, switching, by the non-AP MLD, a data service transmitted on a physical link of the first MLD to all links of the second MLD for transmission.

20. The method according to claim 19, wherein the method further comprises:
if the first identifier indicates that the first MLD does not comprise a virtual link, and the second identifier indicates that the second MLD comprises a virtual link, switching, by the non-AP MLD, a data service transmitted on all links of the first MLD to a physical link of the second MLD for transmission.

21. A communication apparatus, comprising a communication unit, wherein
the communication unit is configured to receive first user information from a first multi-link device MLD, wherein the first user information comprises one or more of address information of a non-access point multi-link device non-AP MLD that performs data service transmission with the first MLD, a quantity of links of the non-AP MLD, a link capability of the non-AP MLD, a quantity of links of the first MLD, and a link capability of the first MLD; and
the communication unit is further configured to send the first user information to a second MLD, wherein the second MLD and the first MLD belong to different MLD sets, the non-AP MLD performs data service transmission with only one MLD set at a same moment, and the first user information is used by the second MLD to determine second user information for performing data service transmission with the non-AP MLD.

22. The apparatus according to claim 21, wherein the communication unit is further configured to receive physical addresses of links of all MLD sets; and
the communication apparatus further comprises a processing unit, and the processing unit is configured to:
determine a multicast key of each link based on the physical addresses of the links of all the MLD sets; and
determine a unicast key of the non-AP MLD based on the address information of the non-AP MLD.

23. The method according to claim 22, wherein the communication unit is further configured to:
receive a first request message from the first MLD, wherein the first request message is used to request to obtain first key information of the first MLD; and
send a multicast key of each link of the first MLD and the unicast key of the non-AP MLD to the first MLD.

24. The method according to claim 22, wherein the communication unit is further configured to:
receive a second request message from the first MLD, wherein the second request message is used to request to obtain second key information of the second MLD; and
send a multicast key of each link of the second MLD to the first MLD set.

25. The method according to claim 21 or 22, wherein the communication unit is further configured to:
send first indication information to the first MLD set, wherein the first indication information indicates the first MLD to switch a data service of the non-AP MLD to the second MLD for transmission.

26. The method according to claim 21, wherein the communication unit is further configured to receive respective physical link capabilities of a plurality of MLDs in all MLD sets;
the processing unit is further configured to determine that a maximum value of the respective physical link capabilities of the plurality of MLDs is a maximum physical link capability; and
the communication unit is further configured to send second indication information to the plurality of MLDs, wherein the second indication information indicates the maximum physical link capability, and the plurality of MLDs comprise the first MLD and the second MLD.

27. A communication apparatus, comprising a communication unit and a processing unit, wherein the communication unit and the processing unit are configured to perform the method according to any one of claims 7 to 13 or claims 14 to 20.

28. A communication apparatus, comprising a processor and a memory, wherein the memory is configured to store instructions, and when the instructions are executed by the processor, the communication apparatus is enabled to perform the method according to any one of claims 1 to 6, claims 7 to 13, or claims 14 to 20.

29. A communication system, comprising a communication apparatus, wherein the communication apparatus is configured to perform the method according to any one of claims 1 to 6, claims 7 to 13, or claims 14 to 20.

30. A computer-readable storage medium, wherein the computer-readable storage medium stores instructions, and when the instructions are run on a computer, the computer is enabled to perform the method according to any one of claims 1 to 6, claims 7 to 13, or claims 14 to 20.

31. A chip system, wherein the chip system comprises a processor and an interface, and the processor is configured to execute a computer program to enable the chip system to implement the method according to any one of claims 1 to 6, claims 7 to 13, or claims 14 to 20.

32. A computer program product, comprising instructions, wherein when the instructions are run on a computer, the computer is enabled to perform the method according to any one of claims 1 to 6, claims 7 to 13, or claims 14 to 20.
